# EUROPEAN PATENT APPLICATION

(11) **EP 2 803 705 A1**
(43) Date of publication of application: **19.11.2014**
(21) Application number: 13735867.7
(22) Date of filing: 11.01.2013
(51) Int. Cl.: C09D 11/00, B41J 2/01, B41M 5/00, B41M 5/50, B41M 5/52

(54) **ACTIVE-ENERGY-RAY-CURABLE INK COMPOSITION AND PRINTED OBJECT USING SAID INK COMPOSITION**

(30) Priority: 12.01.2012 JP 2012004526
(71) Applicant: DNP Fine Chemicals Co., Ltd., Kanagawa 226-0022 (JP)
(72) Inventor: SAITO, Yasuma, Yokohama-shi Kanagawa 226-0022 (JP); FURUTAKA, Toshio, Yokohama-shi Kanagawa 226-0022 (JP); SUGITA, Yukio, Yokohama-shi Kanagawa 226-0022 (JP)
(74) Representative: KATZAROV S.A.
(86) International application number: PCT/JP2013/050470
(87) International publication number: WO 2013/105661

(57) **Abstract**

Provided is an ink composition having excellent conformability even to a flexible base material to be printed. This active-energy-ray-curable ink composition comprises active-energy-ray-polymerizable monomers and an active-energy-ray polymerization initiator. The active-energy-ray-polymerizable monomers include: monomer A which is a monofunctional monomer having a glass transition point of -30°C or lower; and monomer B which is a polyfunctional monomer having a glass transition point of 0°C or lower. Preferably, said monomer B is a bifunctional monomer having a glass transition point of -30°C or lower. Preferably, the active-energy-ray-polymerizable monomers further include monomer C which is a monofunctional monomer having an alicyclic structure with a glass transition point between 0-110°C inclusive. The ink composition may also include a colorant.

## Description

### TECHNICAL FIELD

The present invention relates to an active-energy-ray-curable ink composition, and a printed object obtained by printing this ink composition on a base material having high flexibility by an inkjet method at normal temperature.

### BACKGROUND ART

The development of active-energy-ray-curable ink compositions that are cured by ultraviolet radiation, electron beams, and other active energy radiations has been carried out to the present day. Since active-energy-ray-curable ink compositions have a property of being rapidly dryable, even in the case of printing on a base material to be printed that does not, or almost does not, absorb ink, such as plastic, glass, or coated paper, the bleeding of ink can be prevented. An active-energy-ray-curable ink composition is composed of a polymerizable monomer, a polymerization initiator, a pigment, other additives, and the like.

In recent years, it is required that, without being4 limited to the case in which the base material to be printed is plastic, glass, coated paper or the like, printing be achieved even in the case in which the base material to be printed is a flexible material such as a polyethylene terephthalate resin, a vinyl chloride resin or rubber. In this case, it is required that even if the printed object is stretched, the printed object has an elongation of 100% or more without causing cracking or peeling, and the printed object possesses durability at that elongation.

An example of such an active-energy-ray-curable ink composition has been proposed, such a composition containing (A) from 20% by mass to 65% by mass among the reaction components of an acrylate monomer which gives a homopolymer having a glass transition point of 0°C or lower, (B) a monofunctional acrylate having an alicyclic structure, and (C) a polyfunctional acrylate having an alicyclic structure (see Patent Document 1). Printed objects obtained by printing this ink composition on a polyethylene terephthalate resin and a vinyl chloride resin are excellent in flexibility, elongation durability, scratch resistance and weather resistance, so that even if the printed objects are stretched and affixed to articles having curved surfaces, such as vehicle bodies, since the printed objects have durability when elongated, the printed objects do not undergo cracking or peeling.

Furthermore, a composition has been suggested containing (A) one kind or two or more kinds of monofunctional monomers selected from vinyl caprolactam, benzyl (meth)acrylate and isobornyl (meth)acrylate; (B) a di(meth)acrylate form of a bisphenol A alkylene oxide modification product; (C) one kind or two or more kinds of monomers selected from 2-hydroxy-3-phenoxypropyl (meth)acrylate, 4-t-butylcyclohexyl (meth)acrylate and phenoxyethyl (meth)acrylate; and (D) an active-energy-ray polymerization initiator (see Patent Document 2). According to this ink composition, even in the case of printing on a thermoplastic resin sheet of an acrylic resin, a polycarbonate resin or the like, printing can be achieved directly without providing a treated layer, so that the sheet after being cured can be used in thermal molding. When curved surface areas are produced by thermal molding, the sheet is partially stretched; however, since the ink composition has excellent flexibility and adhesiveness, an excellent ink composition that does not cause cracking or a clouding phenomenon is obtained.
[Patent Document 1] Japanese Unexamined Patent Application, Publication No. 2011-162703
[Patent Document 2] PCT International Application, Publication No. 2011/064977

### DISCLOSURE OF THE INVENTION

### Problems to be Solved by the Invention

However, in the case of printing on an elastomer base material which is a polymeric material having rubber elasticity at normal temperature, since the base material to be printed is more flexible and has higher elongation than the base materials described above, higher conformability is demanded to the elongation of the base material. Furthermore, since the base material has rubber elasticity at normal temperature, it is required that even if the base material is subjected to expansion and contraction repeatedly, the base material does not undergo peeling or cracking. Conformability means that the base material undergoes expansion and contraction in synchrony, without causing cracks against deformation of the base material (hereinafter, the same).

The present invention was achieved in view of such circumstances, and an object of the invention is to provide an ink composition having excellent conformability even on a base material to be printed having high flexibility at normal temperature, such as an elastomer base material.

### Means for Solving the Problems

The inventors of the present invention conducted a thorough investigation in order to solve the problems described above, and the inventors found that the problems can be solved by investigating the composition of active-energy-ray-polymerizable monomers in an active-energy-ray-curable ink composition containing active-energy-ray-polymerizable monomers and an active-energy-ray-polymerization initiator, thus completing the present invention. Specifically, the present invention provides the following.
(1) The present invention relates to an active-energy-ray-curable ink composition containing active-energy-ray-polymerizable monomers and an active-energy-ray-polymerization initiator, the ink composition containing, as the active-energy-ray-polymerizable monomers, monomer A): a monofunctional monomer having a glass transition point of -30°C or lower; and monomer B): a polyfunctional monomer having a glass transition point of 0°C or lower.
(2) Furthermore, the present invention relates to the active-energy-ray-curable ink composition according to (1), wherein the monomer B) is a bifunctional monomer having a glass transition point of -30°C or lower.
(3) Furthermore, the present invention relates to the active-energy-ray-curable ink composition according to (1) or (2), including 2% to 65% by mass of the monomer A), and 2% to 30% by mass of the monomer B) among the active-energy-ray-polymerizable monomers.
(4) Furthermore, the present invention relates to the active-energy-ray-curable ink composition according to any one of (1) to (3), further including, as the active-energy-ray-polymerizable monomer, monomer C): a monofunctional monomer having an alicyclic structure having a glass transition point of from 0°C to 110°C.
(5) Furthermore, the present invention relates to the active-energy-ray-curable ink composition according to (4), including 20% to 65% by mass of the monomer C) among the active-energy-ray-polymerizable monomers.
(6) Furthermore, the present invention relates to the active-energy-ray-curable ink composition according to (4) or (5), wherein the monomer A) is any one or more monomers selected from isooctyl acrylaate, tridecyl acrylate and ethoxydiethylene glycol acrylate; the monomer B) is any one or more monomers selected from polypropylene glycol diacrylate, polyethylene glycol diacrylate and EO-modifieid bisphenol A diacrylate; and the monomer C) is any one or more monomers selected from isobornyl acrylate, 4-t-butylcyclohexyl acrylate, cyclohexyl acrylate and dicyclopentenyloxyethyl acrylate.
(7) Furthermore, the present invention relates to the active-energy-ray-curable ink composition according to any one of (1) to (6), further including a coloring material.
(8) Furthermore, the present invention relates to the active-energy-ray-curable ink composition according to any one of (1) to (7), wherein when the active-energy-ray-curable ink composition according to any one of (1) to (7) is formed as a cured film having a thickness of 10 µm on a styrene-butadiene rubber (hereinafter, also referred to as "SBR") sheet having a thickness of 1 mm, and the cured film-formed base material having this cured film formed thereon is subjected to a tensile test as a specimen of dumbbell-shaped No. 6 (JIS K6251-5) according to the method of JIS K7161 at 25°C and a tensile rate of 100 mm/min, the cured film fracture point elongation at which the cured film undergoes cracking is 200% or more.
(9) Furthermore, the present invention relates to the active-energy-ray-curable ink composition according to any one of (1) to (8), wherein when the active-energy-ray-curable ink composition is formed as a cured film having a thickness of 10 µm on an SBR sheet having a thickness of 1 mm, and expansion and contraction of the cured film-formed base material is repeated 50 times at a strain rate of 100 mm/min so that the elongation ratio of the cured film-formed base material having the cured film formed thereon oscillates in the range of from 100% to 200%, and the cured film does not undergo cracking.
(10) Furthermore, the present invention relates to the active-energy-ray-curable ink composition according to any one of (1) to (9), which is used as an inkjet ink for an elastomer base material or a base material to be printed having a Young's modulus of from 0.001 MPa to 30 MPa.
(11) Furthermore, the present invention relates to a printed object in which an ink cured film layer that is a cured film of the active-energy-ray-curable ink composition according to any one of (1) to (10), formed on an elastomer base material or a base material to be printed having a Young's modulus of from 0.001 MPa to 30 MPa.
(12) Furthermore, the present invention relates to the printed object according to (11), wherein a surface protective layer that protects the surface of the ink cured film layer is formed on the surface of the ink cured film layer.
(13) Furthermore, the present invention relates to the printed object according to (11) or (12), wherein a primer layer is formed between the surface of the elastomer base material or the base material to be printed and the ink cured film layer.
(14) Furthermore, the present invention relates to a method for producing a printed object, the method including printing the active-energy-ray-curable ink composition according to any one of (1) to (9) on an elastomer base material or a base material to be printed having a Young's modulus of from 0.001 MPa to 30 MPa by an inkjet method, and then curing the ink composition by ultraviolet radiation.

### Effects of the Invention

According to the present invention, an ink composition having excellent conformability even on a base material to be printed having high flexibility at normal temperature (may be referred to as a flexible base material), such as an elastomer base material, can be provided.

### PREFERRED MODE FOR CARRYING OUT THE INVENTION

Hereinafter, specific embodiments of the present invention will be described in detail, but the present invention is not intended to be limited to the following embodiments, and the present invention can be carried out by applying appropriate modifications within the intended scope of the present invention.

### Active-energy-ray-curable ink composition

The active-energy-ray-curable ink composition of the present invention contains active-energy-ray-polymerizable monomers and an active-energy-ray-polymerization initiator. Furthermore, the active-energy-ray-polymerizable monomers are composed of monomer A): a monofunctional monomer having a glass transition point of -30°C or lower, and monomer B): a polyfunctional monomer having a glass transition point of 0°C or lower.

In the present specification, the term "active-energy-ray-polymerizable monomer" refers to a polymerizable monomer having one or more ethylenically unsaturated double bonds (hereinafter, it may be referred to as "monomer").

### [Monomer A): Monofunctional monomer having glass transition point of -30°C or lower]

The active-energy-ray-polymerizable monofunctional monomers include monomer A), an active-energy-ray-polymerizable monofunctional monomer having an ethylenically unsaturated double bond, which gives a homopolymer having a glass transition point (Tg) of lower than -30°C (hereinafter, also referred to as "monomer A"). The monomer A) can increase flexibility and stretchability of the cured film. Flexibility being high means that when the base material on which a cured film of the ink composition is bent, the cured film of ink is not easily damaged, and stretchability being high means that when the base material on which a cured film of the ink composition is formed, the cured film of ink is not easily breakable (hereinafter, the same).

Examples of the monomer A) include 2-ethylhexyl acrylate (Tg = -85°C), 2-ethylhexylcarbitol acrylate (Tg = -65°C), 2-methoxyethyl acrylate (Tg = -50°C), 2-methoxybutyl acrylate (Tg = -56°C), 4-hydroxybutyl acrylate (Tg = -80°C), diethylene glycol monoethyl ether acrylate (Tg = -70°C), ethoxydiethylene glycol acrylate (Tg = -70°C), isoamyl acrylate (Tg = -45°C), isodecyl acrylate (Tg = -55°C), isooctyl acrylate (Tg = -83°C), isotetradecyl acrylate (Tg = -56°C), caprolactone acrylate (Tg = -53°C), methoxytripropylene glycol acrylate (Tg = -75°C), EO (ethylene oxide)-modified succinic acid acrylate (Tg = -40°C), and tridecyl acrylate (Tg = -75°C). Among them, from the viewpoint of having excellent flexibility and adhesiveness and undergoing curing shrinkage, the monomer A) is preferably any one or more monomers selected from isooctyl acrylate, tridecyl acrylate and ethoxydiethylene glycol acrylate.

The content of the monomer A) is preferably from 2% by mass to 65% by mass, more preferably from 5% by mass to 50% by mass, and even more preferably from 10% by mass to 35% by mass, relative to the total amount of the active-energy-ray-polymerizable monomers. If the content is less than 2% by mass, it is not preferable from the viewpoint that when the ink composition is printed on a flexible base material, the ink composition cannot conform to the elongation of the flexible base material, and cracking or peeling may occur in the cured product of the ink composition. If the content is more than 65% by mass, it is not preferable from the viewpoint that when the ink composition is irradiated with a predetermined amount of active energy radiation, there is the possibility that curing of the ink composition may be insufficient.

### [Monomer B): Polyfunctional monomer having glass transition point of 0°C or lower]

The active-energy-ray-polymerizable monofunctional monomers include monomer B): a polyfunctional monomer having an ethylenically unsaturated double bond, which gives a homopolymer having a glass transition point of 0°C or lower (hereinafter, also referred to as "monomer B"). The monomer B) contributes to an enhancement of curability, and since the glass transition point is low, the monomer B) is well-balanced between "curability" and "flexibility or stretchability". Curability means that since the monomer is polyfunctional, the monomer has high crosslinkability, and can form a cured film with only a small amount of active energy ray irradiation. If Tg is higher than 0°C, it is not preferable from the viewpoint that when printing is performed on an elastomer base material or the like, the ink composition cannot conform to the elongation of the base material to be printed, and cracking or peeling may occur in the cured product of the ink composition.

Regarding the monomer B), preferred examples of bifunctional monomers include diacrylates of 11-mole to 32-mole ethylene oxide addition modification products of bisphenol A (hereinafter, referred to as "EO-modified"); polyethylene glycol diacrylates having a number of repetition n of ethylene glycol of 7 to 14; and polypropylene glycol diacrylates having a number of repetition n of propylene glycol of 7 to 14. More preferred examples include EO-modified (30) bisphenol A diacrylate (Tg = -42°C), which is a 30-mole EO addition modification product, polyethylene glycol diacrylate (n = 9, Tg = -20°C), polyethylene glycol diacrylate (n = 13 to 14, Tg = -34°C), polypropylene glycol diacrylate (n = 7, Tg =-8°C), and polypropylene glycol diacrylate (n = 12, Tg = -32°C).

Regarding the monomer B), examples of trifunctional monomers include EO-modified (3) trimethylolpropane triacrylate (Tg = -40°C), EO-modified (6) trimethylolpropane triacrylate (Tg = -8°C), EO-modified (9) trimethylolpropane triacrylate (Tg = -19°C), EO-modified (15) trimethylolpropane triacrylate (Tg = -32°C), propylene oxide addition modification products (hereinafter, referred to as "PO-modified") (3) trimethylolpropane triacrylate (Tg = -15°C), and PO-modified (6) trimethylolpropane triacrylate (Tg = -15°C).

Among the monomers described above, from the viewpoint of having a cured film having excellent flexibility and curability, a bifunctional monomer having a Tg of -30°C or lower is preferred, and any one or more monomers selected from polypropylene glycol diacrylate (n = 12, Tg = -32°C), polyethylene glycol diacrylate (n = 13 to 14, Tg = -34°C), and EO-modified (30) bisphenol A diacrylates (Tg = -42°C) are more preferred.

The content of the monomer B) is preferably from 2% by mass to 30% by mass, more preferably from 5% by mass to 15% by mass, and particularly preferably from 9% by mass to 15% by mass, relative to the total amount of the active-energy-ray-polymerizable monomers. If the content is less than 2% by mass, when the ink composition is cured by irradiating the ink composition with active energy radiation, a large amount of irradiation is required, and there is a possibility that curing cannot be sufficiently achieved with a predetermined amount of active energy ray irradiation. If the content is more than 30% by mass, the viscosity increases, and crosslinkability becomes excessively high, so that there is a possibility that conformability or stretchability may decrease.

When both the monomer A) and the monomer B) are incorporated, a good balance can be achieved between "flexibility or stretchability" and "curability". When only the monomer A) or only the monomer B) is used, a balance between "flexibility or stretchability" and "curability" cannot be achieved, and an ink composition conforming to a flexible base material cannot be obtained.

### [Monomer C): Monofunctional monomer having alicyclic structure with glass transition point of from 0°C to 110°C]

The active-energy-ray-polymerizable monofunctional monomers include monomer C): a monofunctional monomer having an alicyclic structure, which gives a homopolymer having a glass transition point of from 0°C to 110°C (hereinafter, also referred to as "monomer C)"). When a monofunctional monomer having an alicyclic structure is incorporated in an appropriate amount while the glass transition point is maintained in the range described above, flexibility and film strength of the cured film are enhanced in a well-balanced manner.

Examples of the monomer C) include isobornyl acrylate (Tg = 94°C), 4-t-butylcyclohexyl acrylate (Tg = 34°C), cyclohexyl acrylate (Tg = 15°C), and dicyclopentenyloxyethyl acrylate (Tg = 14°C). Among them, from the viewpoint of enhancing the balance between flexibility and film strength, the monomer C is preferably any one or more monomers selected from isobornyl acrylate, 4-t-butylcyclohexyl acrylate, cyclohexyl acrylate, and dicyclopentenyloxyethyl acrylate.

From the viewpoint of appropriately enhancing the balance between flexibility and film strength, the content of the monomer C) is preferably from 20% by mass to 65% by mass, and more preferably from 25% by mass to 55% by mass, relative to the total amount of the active-energy-ray-polymerizable monomers. If the content is less than 20% by mass, there is a possibility that the film strength of the cured film may be decreased, which is not preferable. If the content is more than 65% by mass, although the film strength is increased, conformability or flexibility of the base material is decreased, and there is a possibility that the balance between the film strength and flexibility may be decreased, which is not preferable.

When the monomer C) is also incorporated in addition to the monomer A) and the monomer B), since the "coating film strength" is increased, consequently a cured film which satisfies all of "flexibility or stretchability", "curability" and "coating film strength" can be obtained.

Furthermore, another monomer may also be appropriately added in addition to the monomers A) to C), to the extent that the object of the present invention can be achieved. For example, a monofunctional monomer that is exemplified by phenoxyethyl acrylate (Tg = -22°C), lauryl acrylate (Tg =-3°C), 2-hydroxyethyl acrylate (Tg = -15°C), stearyl acrylate (Tg = 30°C), dicyclopentenyl acrylate (Tg = 120°C), dicyclopentanyl acrylate (Tg = 120°C), or 1-adamantyl acrylate (Tg = 153°C); or a polyfunctional monomer that is exemplified by 1,4-butanediol diacrylate (Tg = 45°C), tetraethylene glycol diacrylate (Tg = 23°C), dimethyloltricyclodecane diacrylate (Tg = 187°C), trimethylolpropane triacrylate (Tg = 62°C), or pentaerythritol triacrylate (Tg = 103°C) may also be added.

### [Active-energy-ray-polymerization initiator]

The active-energy-ray-curable ink composition contains an active-energy-ray-polymerization initiator. The active energy radiation may be any light radiation such as far-ultraviolet radiation, ultraviolet radiation, near-ultraviolet radiation and infrared radiation; electromagnetic waves such as X-radiation and γ-radiation; an electron beam, a proton beam, and a neutron beam, as long as the active energy radiation is energy radiation that serves as a trigger of a polymerization reaction of a radical, a cation, an anion or the like; however, from the viewpoints of the rate of curing, easily availability of the irradiation apparatus, price and the like, curing by ultraviolet irradiation is preferred. The active-energy-ray-polymerization initiator is not particularly limited as long as the initiator can accelerate a polymerization reaction of a compound having an ethylenically unsaturated double bond in an active-energy-ray-curable ink composition, by irradiation of active energy radiation, and any active-energy-ray-polymerization initiator that is conventionally known can be used. Specific examples of the active-energy-ray-polymerization initiator include, for example, aromatic ketones such as thioxanthone; α-aminoalkylphenones; α-hydroxyketones; acylphosphine oxides; aromatic onium salts; organic peroxides; thio compounds; hexaarylbiimidazole compounds; keto oxime ester compounds; borate compounds; azinium compounds; metallocene compounds, active ester compounds, compounds having carbon-halogen bonds; and alkylamine compounds.

According to the present invention, regarding the active-energy-ray-polymerization initiator, from the viewpoint of accelerating a polymerization reaction and increasing curability, it is preferable to use, among others, one or more selected from the group consisting of acylphosphine oxides, α-hydroxyketones, and α-aminoalkylphenones.

Specific examples of the acylphosphine oxides include bis(2,4,6-trimethylbenzoyl)-phenylphosphine oxide (trade name: IRGACURE 819, manufactured by BASF Japan, Ltd.), bis(2,6-dimethoxybenzoyl)-2,4,4-trimethylpentylphenylphoshpine oxide, and (2,4,6-trimethoxybenzoyl)phosphine oxide (trade name: LUCIRIN TPO, manufactured by BASF Japan, Ltd.).

Specific examples of α-hydroxyketone include 2-hydroxy-1-{4-[4-(2-hydroxy-2-methylpropionyl)benzyl]phenyl}-2-methylpropan-1-one (trade name: IRGACURE 127, manufactured by BASF Japan, Ltd.), 2-hydroxy-4'-hydroxyethoxy-2-methylpropiophenone (trade name: IRGACURE 2959, manufactured by BASF Japan, Ltd.), 1-hydroxycyclohexyl phenyl ketone (trade name: IRGACURE 184, manufactured by BASF Japan, Ltd.), and an oligo{2-hydroxy-2-methyl-1-[4-(1-methylvinyl)phenyl]propanone (for example, trade name: ESACURE ONE, manufactured by Lamberti Group).

Specific examples of α-aminoalkylphenone include 2-benzyl-2-dimethylamino-1-(4-morpholinophenyl)butanone-1 (trade name: IRGACURE 369, manufactured by BASF Japan, Ltd.), and 2-dimethylamino-2-[(4-methylphenyl)methyl]-1-[4-(4-morpholinyl)phenyl]-1-butanone (for example, trade name: IRGACURE 379, manufactured by BASF Japan, Ltd.).

The amount of the active-energy-ray-polymerization initiator may be any amount capable of appropriately initiating the polymerization reaction of an active energy-ray-polymerizable monomer, and the amount is preferably from 1% by mass to 20% by mass, and more preferably from 3% by mass to 20% by mass, relative to the total amount of the active-energy-ray-curable ink composition.

### [Coloring material]

The active-energy-ray-curable ink composition of the present invention further includes a coloring material. The coloring material may be any inorganic pigment or organic pigment that is usually used in conventional oily ink compositions, and examples include carbon black, cadmium red, molybdenum red, chrome yellow, cadmium yellow, titanium yellow, titanium oxide, chromium oxide, viridian, Titanium Cobalt Green, Ultramarine Blue, Prussian Blue, Cobalt Blue, diketopyrrolopyrrole, anthraquinone, benzimidazolone, anthrapyrimidine, azo-based pigments, phthalocyanine-based pigments, quinacridone-based pigments, isoindolinone-based pigments, dioxazine-based pigments, indanthrene-based pigments, perylene-based pigments, perinone-based pigments, thioindigo-based pigments, quinophthalone-based pigments, metal complex pigments, aluminum paste, silica, calcium carbonate, magnesium carbonate, clay, precipitated barium sulfate, and pearl pigment.

A preferred dispersed particle size of the pigment of the active-energy-ray-curable ink composition is preferably from 10 nm to 300 nm as a volume average particle size according to a laser scattering method. If the dispersed particle size is less than 10 nm, since light resistance may be decreased, it is not preferable. On the other hand, if the dispersed particle size is more than 300 nm, stable maintenance of dispersion is made difficult, and when precipitation of the pigment occurs, or the inkjet ink is ejected by an inkjet recording apparatus, head clogging may occur, or ejection bending may occur, which is not preferable.

According to the present invention, when a pigment is used, the content may be appropriately adjusted. The content may vary depending on the kind of the pigment, but from the viewpoint of achieving a balance between dispersibility and coloring power, the content of the pigment in the total amount of the inkjet ink composition is preferably 0.1% to 20% by mass, and more preferably 0.2% to 10% by mass, in the case of an organic pigment. Furthermore, from the viewpoint of achieving a balance between dispersibility and coloring power, the content is preferably 1% to 40% by mass, and more preferably 5% to 20% by mass, in the case of an inorganic pigment.

### [Dispersant]

It is preferable that the active-energy-ray-curable ink composition contain a dispersant for dispersing the coloring material. An example of the dispersant may be a polymeric dispersant. The main chain of this polymeric dispersant is formed of a polyester-based chain, a polyacrylic chain, a polyurethane-based chain, a polyamine-based chain, a polycaprolactone-based chain or the like, and the polymeric dispersant preferably has, as a side chain, a polar group such as an amino group, a carboxyl group, a sulfone group or a hydroxyl group, or a salt thereof.

Preferred examples of the polymeric dispersant include polyester-based dispersants, and specific examples include "SOLSPERSE 33000", "SOLSPERSE 32000", and "SOLSPERSE 24000" manufactured by Lubrizol Japan, Ltd.; "Disperbyk 168" manufactured by BYK Chemie GmbH; and "AJISPER PB821" manufactured by Ajinomoto Fine-Techno Co., Inc.

The proportion of the polymeric dispersant is preferably, as an active ingredient, from 3 parts by mass to 100 parts by mass, and more preferably from 5 parts by mass to 60 parts by mass, relative to 100 parts by mass of the coloring material. If the proportion is less than 3 parts by mass, the polymeric dispersant cannot disperse the coloring material uniformly, a decrease in the stability of the ink or a decrease in ejectability is possible, which is not preferable. Stability of the ink means stability of the ink properties (for example, viscosity or particle size) obtainable when the ink composition is stored for a long time. If the proportion is more than 100 parts by mass, the proportion of curable components such as polymerizable monomers is relatively reduced so that curability may be decreased, or flexibility of a cured product may be decreased, which is not preferable.

Furthermore, the content of the polymeric dispersant is preferably, as an active ingredient, from 0.1% by mass to 30% by mass, and more preferably from 0.5% by mass to 20% by mass, relative to the total amount of the ink composition. If the content is less than 0.1% by mass, the polymeric dispersant cannot disperse the coloring material uniformly, a decrease in the stability of the ink or a decrease in ejectability is possible, which is not preferable. If the content is more than 30% by mass, the proportion of curable components such as polymerizable monomers is relatively reduced so that curability may be decreased, or flexibility of the cured product may be decreased, which is not preferable.

### [Surface adjusting agent]

The active-energy-ray-curable ink composition may further include a surface adjusting agent. There are no particular limitations on the surface adjusting agent, but specific examples include "BYK-306", "BYK-333", "BYK-371", and "BYK-377" manufactured by BYK Chemie GmbH, which have dimethylpolysiloxane; "TegoRad 2100", "TegoRad 2200N" and "TegoRad 2300" manufactured by Evonik Degussa Japan Co., Ltd.

The content of the surface adjusting agent is preferably from 0.1% by mass to 1% by mass relative to the total amount of the ink composition. If the content is less than 0.1% by mass, it is not preferable from the viewpoint that the ink has high surface tension, and the wettability to an elastomer base material or the like is decreased. Having good wettability means that when printing is performed on a base material, the ink composition spreads while wetting, without causing cissing. If the content is more than 1% by mass, since the wet tension of the cured product is lowered, it is not preferable from the viewpoint that when a surface protective layer is formed on the surface of the cured product, cissing may occur.

### [Other additives]

Furthermore, the active-energy-ray-curable ink composition may also include, as other additives, various additives such as a plasticizer, a polymerization inhibitor, a photostabilizer, and an oxidation inhibitor. A solvent can be added to the extent that the object of the present application is achieved, but it is most preferable that the ink composition does not contain a solvent.

### [Viscosity]

The viscosity of the active-energy-ray-curable ink composition is preferably from 5 mPa•s to 20 mPa•s, and more preferably from 5 mPa•s to 15 mPa•s, at 40°C. If the viscosity is less than 5 mPa•s, it is not preferable from the viewpoint that when the ink composition is ejected using an inkjet apparatus, ejectability may be reduced. Ejectability means that dot omission of the ink occurs during continuous printing, or disturbance in ejection or the like occurs, so that printing cannot be carried out normally. If the viscosity exceeds 20 mPa•s, even if a mechanism of decreasing the viscosity by heating is incorporated in the head of the inkjet apparatus, it is not preferable from the viewpoint that ejection failure caused by dot omission occurs, and there is a possibility that the ink composition may not be ejected normally.

Furthermore, from the viewpoint of inkjet ejectability and ejection stability, the surface tension of the active-energy-ray-curable ink composition of the present invention is preferably so that the surface tension at 40°C is 20 mN/m to 40 mN/m.

### Method for preparing active-energy-ray-curable ink composition

There are no particular limitations on the method for preparing the active-energy-ray-curable ink composition of the present invention, and a conventionally known method can be used. First, a coloring material is dispersed with active-energy-ray-polymerizable monomers, a dispersant and the like using a dispersing machine, subsequently an active-energy-ray-polymerization initiator, a surface adjusting agent and the like are added thereto, the mixture is uniformly dispersed, and the mixture is filtered through a filter. Thereby, the active-energy-ray-curable ink composition of the present invention is obtained.

### Method for producing printed object

Production of the printed object of the present invention is carried out by printing the active-energy-ray-curable ink composition on an elastomer base material or on a base material to be printed having a Young's modulus of from 0.001 MPa to 30 MPa by an inkjet method, and then curing the ink composition with active energy radiation. It is desirable that the Young's modulus of the base material to be printed be from 0.001 MPa to 30 MPa, but in the present invention, the ink composition can be suitably used when the Young's modulus is higher than or equal to 0.001 MPa and less than 10 MPa. Printing is preferably carried out with an inkjet method. A spraying method or a brush coating method is not preferable from the viewpoint that the degree of freedom of decoration for the base material to be printed is low.

### [Base material to be printed]

The base material to be printed may be any material as long as it is an elastomer base material or a base material to be printed having a Young's modulus of from 0.001 MPa to 30 Mpa. The elastomer base material also includes a thermoplastic elastomer (hereinafter, also referred to as "TPE"). A TPE refers to a polymeric material which is plasticized at a high temperature and thus can be subjected to injection molding or processing, and exhibits the properties of a rubber elastomer (elastomer) at normal temperature.

A TPE molecule may be a block polymer type in which a hard segment (a plastic component) and a soft segment (an elastic component) are chemically bonded in a single polymer, or may be a blend type in which a hard segment and a soft segment are physically mixed. Examples of the TPE molecule include styrene-based molecules, olefin-based molecules, and polyurethane-based molecules.

Examples of styrene-based elastomers include SBS (styrene-butadiene-styrene block copolymer), SEBS (styrene-ethylene-butylene-styrene block copolymer), and SEPS (styrene-ethylene-propylene-styrene block copolymer). Examples of olefin-based elastomers include TPO (thermoplastic olefin) in which ethylene-propylene rubber is finely dispersed in polypropylene. Furthermore, examples of polyurethane-based elastomers include thermoplastic polyurethane (hereinafter, also referred to as "TPU").

The present invention is characterized in that even with the base material to be printed as described above, the ink composition can sufficiently conform to the elongation of the base material to be printed, and even if the base material to be printed has been subjected to expansion and contraction repeatedly, cracking or peeling of the cured film formed on the surface can be suppressed.

### [Curing by active energy radiation]

The active energy radiation is preferably light having a wavelength region of 200 nm to 450 nm, and more preferably light having a wavelength region of 250 nm to 430 nm. The light source is not particularly limited, and examples include a high pressure mercury lamp, a metal halide lamp, a low pressure mercury lamp, an ultrahigh pressure mercury lamp, an ultraviolet laser, solar light, and an LED lamp. When active energy radiation is irradiated using such a light source so that the cumulative amount of light is 100 mJ/cm² or more, and preferably 200 mJ/cm² or more, the ink composition can be instantaneously cured.

The thickness of the cured film obtained by curing the active-energy-ray-curable ink composition of the present invention (hereinafter, referred to as "cured film") is preferably from 1 µm to 100 µm. If the thickness is less than 1 µm, the color density of the cured film containing a coloring material is lowered, and there is a possibility that designability or decorativeness may be decreased, or a possibility that properties such as adhesiveness or stretchability may be decreased, which is not preferable. If the thickness is more than 100 µm, when active energy radiation is irradiated onto the ink composition, there is a possibility that the ink composition may not be sufficiently cured in a short time, and therefore, it is not preferable.

Regarding the method for measuring the film thickness of the cured film, an ink composition was applied on a PET film (manufactured by Toyobo Co., Ltd., A4300) under the same coating conditions as those used for the cured film thus produced, and the thickness of the cured film thus obtained was measured using a micrometer. Measurement was carried out at 10 sites for one sample, and the average value of these measured values was designated as the average film thickness. The same also applies to the protective layer and primer that will be described below.

When the active-energy-ray-curable ink composition of the present invention is formed on an SBR sheet having a thickness of 1 mm, as a cured film having a thickness of 10 µm, and the cured film-formed base material having this cured film formed thereon was used as a specimen of dumbbell-shaped No. 6 (JIS K6251-5) to perform a tensile test according to the method of JIS K7161 at 25°C and at a tensile rate of 100 mm/min, the minimum elongation ratio at the time when cracking of the cured film occurs is defined as the cured film fracture point elongation, and the cured film fracture point elongation is preferably from 200% (for example, the elongation at the time of stretching the base material to a length of three times the original length is indicated as 200%) to 1000%. When the active-energy-ray-curable ink composition of the present invention is formed on an SBR sheet having a thickness of 1 mm, as a cured film having a thickness of 10 µm, and the cured film-formed base material having this cured film formed thereon was used as a specimen of dumbbell-shaped No. 6 (JIS K6251-5) to perform a tensile test according to the method of JIS K7161 at 25 °C and at a tensile rate of 100 mm/min, the minimum elongation ratio at the time when cracking of the cured film occurs is defined as the cured film fracture point elongation, and the cured film fracture point elongation is preferably 100% (for example, the elongation at the time of stretching the base material to a length of two times the original length is indicated as 100%) or more, and more preferably 200% or more, and is preferably 1000% or less. When the cured film fracture point elongation is 100% or more, the cured film can sufficiently conform to the elongation of the base material to be printed, and even if the base material to be printed is subjected to expansion and contraction, cracking or peeling of the cured film formed on the surface of the base material to be printed can be further suppressed. On the other hand, a cured film fracture point elongation of more than 1000% makes it difficult to obtain high strength of the cured film.

Furthermore, when the active-energy-ray-curable ink composition of the present invention is formed on an SBR sheet having a thickness of 1 mm as a cured film having a thickness of 10 µm, even if expansion and contraction of the cured film-formed base material is repeated 50 times at a strain rate of 100 mm/min so that the elongation ratio of the cured film-formed base material having this cured film formed thereon oscillates in the range of from 100% to 200%, the cured film does not undergo cracking. Therefore, the cured film can sufficiently conform to the elongation of the base material to be printed, and even if the base material to be printed is subjected to expansion and contraction, cracking or peeling of the cured film formed on the surface of the base material can be suppressed.

### [Protection of cured film]

In order to further enhance durability of a printed object, it is preferable that a surface protective layer formed from a surface protective agent is also formed on the surface of the cured film of the ink composition of the present invention. Particularly, when the printed object is exposed to the outdoors, dust, dirt, mud, soot, pitch and the like attach thereto, or cracks and the like are generated at the surface or gloss is impaired due to oxidation or deterioration caused by ultraviolet radiation or the like. Therefore, it is preferable that a surface protective layer formed from a surface protective layer be formed on the surface of the cured film. Meanwhile, the surface protective layer is not limited to the case of being formed on the surface of a layer formed from a cured film of the ink composition, and may be formed directly on the surface of the base material to be printed, or may be formed on the surface of a primer layer formed on the surface of the base material to be printed, which will be described below.

Examples of the surface protective layer include a cured film formed by applying an overcoat agent on a cured film of the ink composition and drying the overcoat agent; and a film base material laminated on the base material to be printed. When the surface protective layer is formed, the surface of the cured film of the ink composition may have tackiness. Tackiness means tacky adhesiveness is felt when the surface of the cured film is touched by a finger. In the case of using an overcoat agent, it is preferable to use a composition including a silicone-modified (meth)acrylic emulsion having a Tg of 50°C, from the viewpoint of having excellent conformability to the base material to be printed, scratch resistance, chemical resistance or the like.

The amount of active ingredient of the silicone-modified (meth)acrylic emulsion of the overcoat agent is preferably 10% to 80%, and more preferably 20% to 60%. If the amount of active ingredient is less than 10%, it is not preferable from the viewpoint that the drying time for forming the protective layer is lengthened, and thus productivity is decreased. If the amount is 80% or more, it is not preferable from the viewpoint of it being possible that it may be difficult to apply the overcoat agent on the base material to be printed.

The thickness of the cured film is preferably from 1 µm to 100 µm. If the thickness is less than 1 µm, it is not preferable because there is a possibility that the cured film may not be protected appropriately. If the thickness is more than 100 µm, it is not preferable from the viewpoint that the drying time for forming the protective layer is lengthened, and thus productivity is lowered.

Examples of commercially available products of a resin composition for forming a surface that includes the silicone-modified (meth)acrylic emulsion include OP-11, OP-13, OP-39, OP-53, and OP-55 (all manufactured by DNP Fine Chemicals Co., Ltd.). All of these are such that the Tg of the silicone-modified (meth)acrylic emulsion included therein is 50°C or lower, and therefore, the cured film undergoes satisfactory elongation. Furthermore, the cured film has high conformability to the base material to be printed even under the conditions in which stress is imposed repeatedly. [Enhancement of adhesiveness between base material to be printed and cured film]

In order to increase adhesiveness between an elastomer base material or a base material to be printed having a Young's modulus of from 0.001 MPa to 30 MPa, and a cured film of the active-energy-ray-curable ink composition of the present invention, a primer layer may be formed between the base material surface and the cured film.

Examples of a primer composition that constitutes the primer layer include the silicone-modified (meth)acrylic emulsion described above, and a resin composition containing a chlorinated polyolefin or the like. From the viewpoint of adhesiveness to the base material to be printed, conformability, adhesiveness to the active-energy-ray-curable ink composition, flexibility and the like, a primer composition containing a silicone-modified (meth)acrylic emulsion having a Tg of 50°C or lower is preferred. Furthermore, in order to increase adhesiveness, a curing agent may be added to the primer composition.

The amount of active ingredient of the silicone-modified (meth)acrylic emulsion of the primer composition is preferably 10% to 80%, and more preferably 20% to 60%. If the amount of the active ingredient is less than 10%, the drying time for forming a primer layer is lengthened, and thus it is not preferable from the viewpoint that the drying time for forming a primer layer is lengthened, and thus productivity is lowered. If the amount is more than 80%, it is not preferable from the viewpoint that there is a possibility that it may be difficult to apply the primer composition.

Examples of the curing agent include polyisocyanate. The content of the curing agent is preferably from 1 part by mass to 50 parts by mass relative to 100 parts by mass of the primer composition. If the content is less than 1 part by mass, it is not preferable from the viewpoint that there is a possibility that even if a curing agent is added, adhesiveness may not be significantly increased. If the content is more than 50 parts by mass, it is preferable because there is a possibility that conformability to the base material to be printed may be reduced.

When the base material to be printed is colored, it is preferable to incorporate a masking pigment such as a white pigment such as titanium oxide, an aluminum paste, or a pearl pigment to the primer composition in order to enhance designability or color developability after printing. Particularly, in order to enhance designability or color developability after printing, a primer composition containing titanium oxide is preferred.

When the primer composition contains titanium oxide, the content of titanium oxide is preferably from 1 part by mass to 50 parts by mass relative to 100 parts by mass of the primer composition. If the content is less than 1 part by mass, there is a possibility that designability or color developability after printing may not be enhanced significantly. If the content is more than 50 parts by mass, the proportion of other resin components is decreased, and thus conformability of the cured film or the like may be decreased.

The thickness of the primer layer is preferably from 1 µm to 100 µm. If the thickness is less than 1 µm, it is not preferable from the viewpoint that even if a primer layer is provided, there is a possibility that adhesiveness between the base material surface and the cured film of the active-energy-ray-curable ink composition may not be enhanced significantly, or from the viewpoint that there is a possibility that in the case of a primer layer containing a masking pigment, designability or color developability after printing may not be enhanced significantly. If the thickness is more than 100 µm, it is not preferable from the viewpoint that the drying time for curing the primer composition is lengthened, and thus productivity is lowered.

Examples of commercially available products of the primer composition include PR-12 and PR-13 (both manufactured by DNP Fine Chemicals Co., Ltd.), both containing titanium oxide and a silicone-modified (meth)acrylic emulsion.

Meanwhile, when a surface protective layer or a primer layer is formed on the base material to be printed, any method that can uniformly apply the ink composition may be used, and for example, the method may be any of spray coating; coating using a towel, a sponge, a nonwoven fabric, a tissue paper or the like; dispenser coating, brush coating, gravure printing, flexographic printing, silk screen printing, inkjetting, and a thermal transfer method.

### EXAMPLES

Hereinafter, the present invention will be described in more detail by way of Examples, but the present invention is not intended to be limited by these descriptions. Preparation of ink composition (Examples 1 to 31 and Comparative Examples 1 to 9)

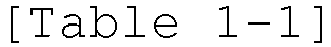

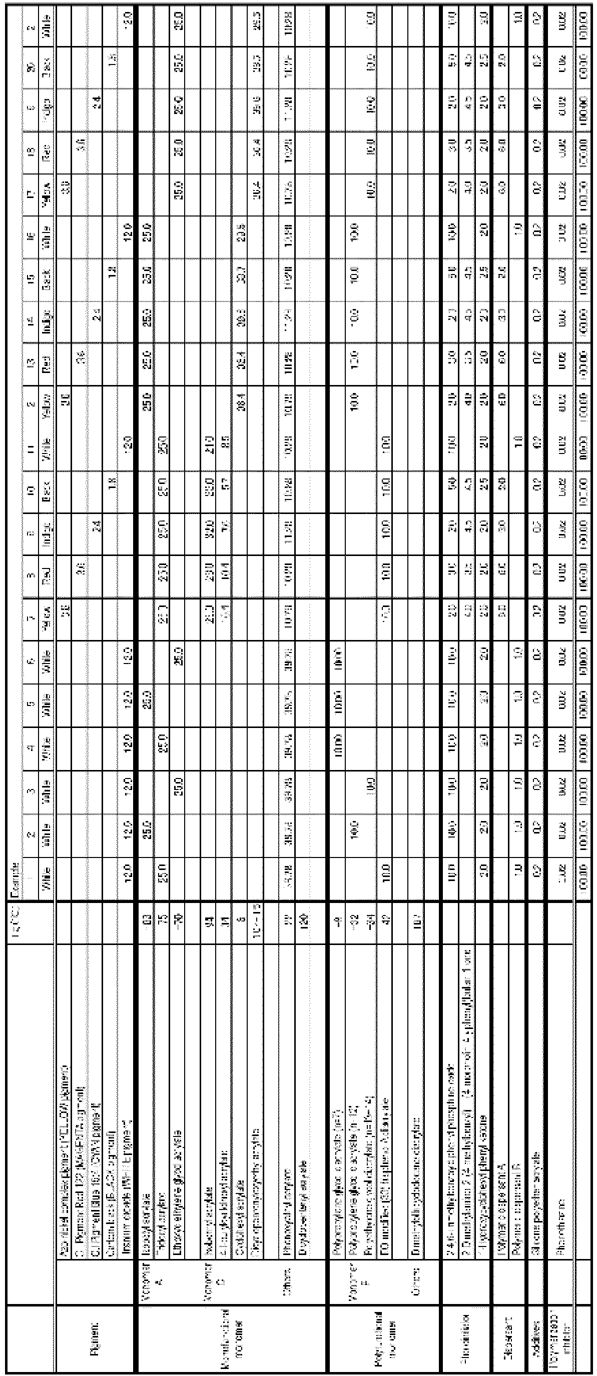

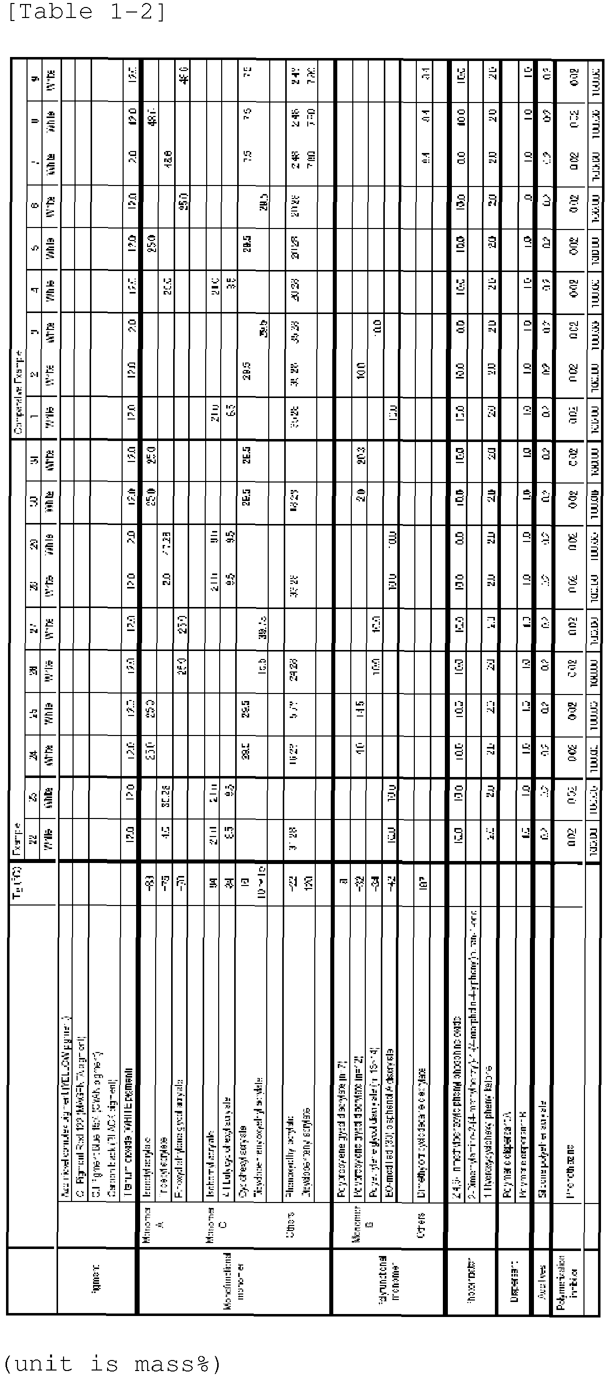

The details of carbon black, a polymeric dispersant A and a polymeric dispersant B are as follows.

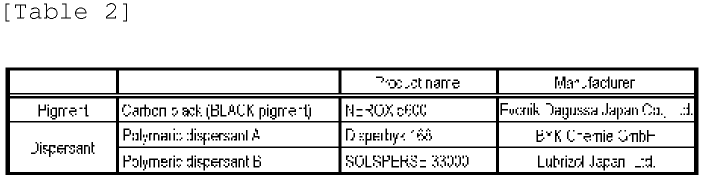

### [Preparation of dispersion]

First, regarding yellow, red, indigo and black colors other than white color, dispersants at the proportions indicated in Table 1-1 and Table 1-2 were dissolved in a monofunctional monomer, and pigments at the proportions indicated in Table 1-1 and Table 1-2 were added thereto. The amount of the monofunctional monomer used herein was adjusted so as to obtain a pigment concentration of 12%. Then, the mixed liquids were respectively dispersed using a paint shaker so that the volume average diameter of the pigment would be 300 nm or less, and thus dispersion mixtures were obtained. The particle size was measured using Microtrac Particle Size Analyzer UPA150 (manufactured by Nikkiso Co., Ltd.), which is a particle size distribution analyzer utilizing a laser scattering method. Furthermore, for a white ink, the same method was carried out except that the pigment concentration was adjusted to be 40%.

### [Preparation of ink composition]

Subsequently, other raw materials were mixed at the proportions indicated in Table 1-1 and Table 1-2, and the mixtures were respectively stirred for one hour while heat was applied at 50°C. Thereafter, it was confirmed that there was no solution residue, the mixtures were returned to room temperature, and then the dispersion that had been prepared in advance was stirred for one hour. Thereafter, the mixture was filtered using a membrane filter. Thus, ink compositions of Examples 1 to 31 and Comparative Examples 1 to 9 were prepared.

### Production of printed object (Examples 1 to 43 and Comparative Examples 1 to 9)

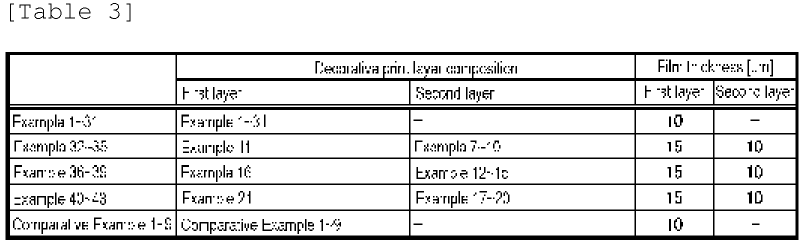

### 1. Production of printed objects related to Examples

Printed objects were produced using an SBR sheet having a thickness of 1 mm and a thermoplastic polyurethane sheet (hereinafter, referred to as "TPU sheet") having a thickness of 0.3 mm as base materials. A composition that constitutes a decorative print layer as indicated in Table 3 was printed on the surface of a base material by an inkjet method under the conditions of a resolution of 720 dpi so that the average film thickness would be a thickness indicated in Table 3 (the layer configuration was as described in Table 4-1 and Table 4-2, and Examples 1 to 43 were produced thereby). The ink compositions were cured using a SubZero system (UV lamp system, manufactured by Integration Technology, Ltd., D valve, power output: 100 W/cm), under the conditions of a cumulative amount of light of 640 mJ/cm², a peak illuminance of 640 mW/cm², and a rate of conveyance of 18 m/min. Measurement of the cumulative amount of light and the peak illuminance was carried out using an ultraviolet actinometer, UV-351 (manufactured by Orc Manufacturing Co., Ltd.). Thereby, decorative print layers were produced.

### 2. Production of printed objects related to Comparative Examples

Decorative print layers were produced by printing at a resolution of 720 dpi for Comparative Examples 1 to 9.

Hereinafter, evaluations of various items will be explained. In regard to the evaluations, there are areas where "○ and ×"-based evaluations and "○, Δ and ×"-based evaluations are carried out, and the ranges of evaluation results that are practically usable will be defined to be limited to ○ for the "○ and ×"-based evaluations, and to ○ and Δ for the "○, Δ and × "-based evaluations.

### [Evaluation of adhesiveness]

Evaluation of adhesiveness was carried out as follows. A Cellophane adhesive tape was attached to a decorative print layer after being cured, the decorative print layer and the Cellophane adhesive tape were caused to adhere sufficiently, and then the Cellophane tape was peeled off at 90°. The extent of adhesion of the decorative print layer to the base material was judged. The results are presented in Tables 4-1 to 4-3. A sample that exhibited no peeling was rated as "O", and a sample that exhibited peeling was rated as "×".

### [Evaluation of curability]

Evaluation of curability was carried out by touching a coating film after being cured, with a finger, and checking the rate of curing and the adhesion of ink. The results are presented in Tables 4-1 to 4-3. A sample which exhibited rapid curing so that ink adhesion did not occur was rated as "O", a sample which took some time for curing but did not have ink adhesion was rated as "Δ", and a sample which exhibited slow curing with ink adhesion was rated as "×".

### [Evaluation of tackiness]

Evaluation of tackiness was carried out at room temperature. A printed object was left to stand at room temperature, the coating film was touched with a finger, and the presence or absence of stickiness was checked. The results are presented in Tables 4-1 to 4-3. A sample without stickiness was rated as "O", a sample which exhibited stickiness was rated as "Δ", and a sample which exhibited strong stickiness was rated as "×".

### [Evaluation of bending resistance]

Evaluation of bending resistance was carried out by a 90° bending test. The 90° bending test was carried out by evaluating by visual inspection the presence or absence of cracks in a cured film when a printed object of an Example or a Comparative Example was bent 90°. The results are presented in Tables 4-1 to 4-3. A sample which did not exhibit cracks was rated as "O", a sample which exhibited cracks in a very small portion was rated as "Δ", and a sample which exhibited cracks over the entire surface was rated as "×".

### [Evaluation of elongation ratio]

Evaluation of the elongation ratio was carried out as follows. The cured film fracture point elongation was measured at which, when a printed object of an Example or a Comparative Example is used as a specimen of dumbbell-shaped No. 6 (JIS K6251-5) to perform a tensile test according to the method of JIS K7161 at 25°C and at a tensile rate of 100 mm/min, cracks occur in the cured film. The cured film fracture point elongation was calculated by the formula: (length of printed object when cracking occurred in the cured film - original length of printed object) / (original length of printed object) × 100. The results are presented in Tables 4-1 to 4-3.

### [Evaluation on occasion of repeatedly stretching printed object]

When a printed object of an Example or a Comparative Example was subjected to expansion and contraction repeatedly 50 times at a strain rate of 100 mm/min so that the elongation ratio oscillated over the range of from 100% to 200%, it was checked whether cracking occurred in the cured film. The elongation ratio was calculated by the formula: (length of printed object when cracking occurred in the cured film - original length of printed object) / (original length of printed object) x 100. The results are presented in Tables 4-1 to 4-3. A sample which did not exhibit cracks in the cured film was rated as "O", a sample which exhibited cracks in a very small portion was rated as "Δ", and a sample which exhibited cracks or peeling was rated as "×".

### [Evaluation of water resistance]

Water resistance was evaluated by immersing a printed object in tap water at room temperature for one week, and by performing the 90° bending test described above while the printed object obtained thereafter was still wet. Furthermore, the printed object was immersed for one week, and the external appearance of the printed object after being dried was evaluated. The results are presented in Tables 4-1 to 4-3. In regard to the 90° bending test, evaluation was performed in the same manner as in the [Evaluation of bending resistance]. Regarding the external appearance, a sample which exhibited no change was rated as "O"; a sample which exhibited a change but did not exhibit any peeling of the coating film was rated as "Δ"; and a sample which exhibited peeling of the coating film was rated as "×".

### [Evaluation of scratch resistance]

Evaluation of scratch resistance was carried out by evaluating the external appearance when a sample was rubbed 100 times in a reciprocating manner with a Polybrush. The results are presented in Tables 4-1 to 4-3. A sample which exhibited no change in the external appearance was rated as "○"; a sample which exhibited scratches in the coating film was rated as "Δ"; and a sample which exhibited peeling of the coating film was rated as "×".

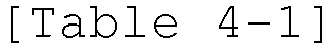

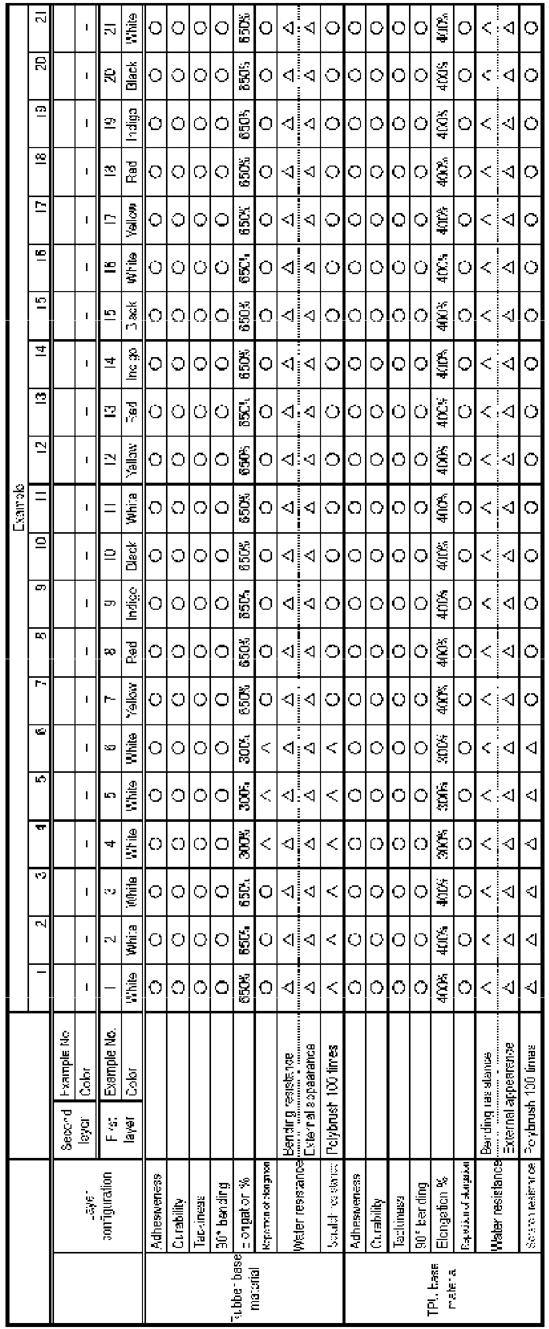

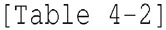

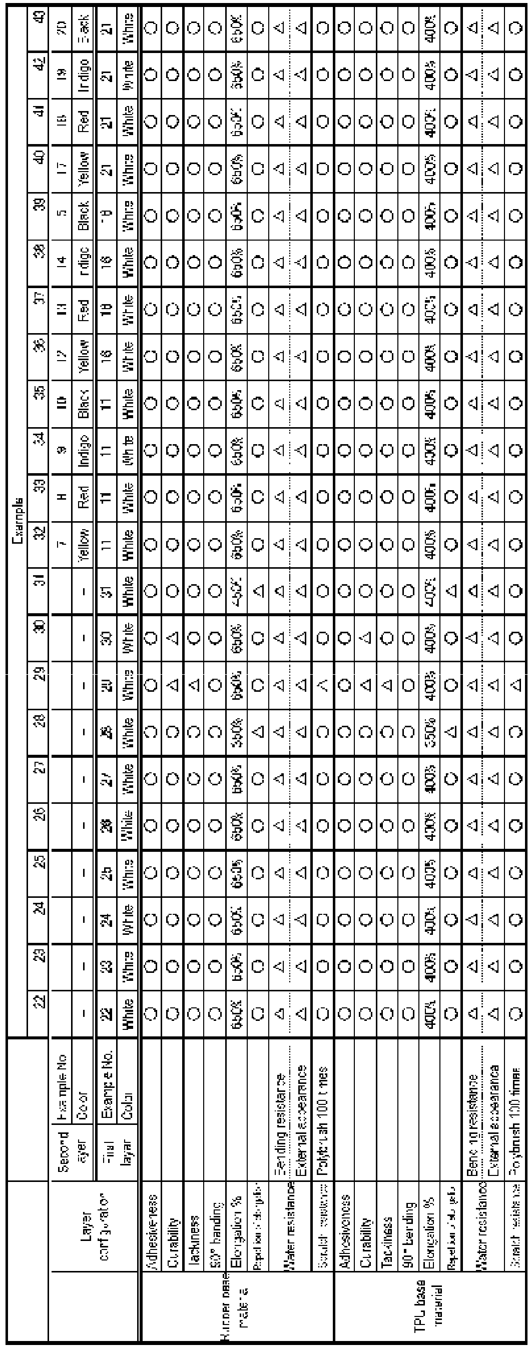

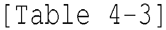

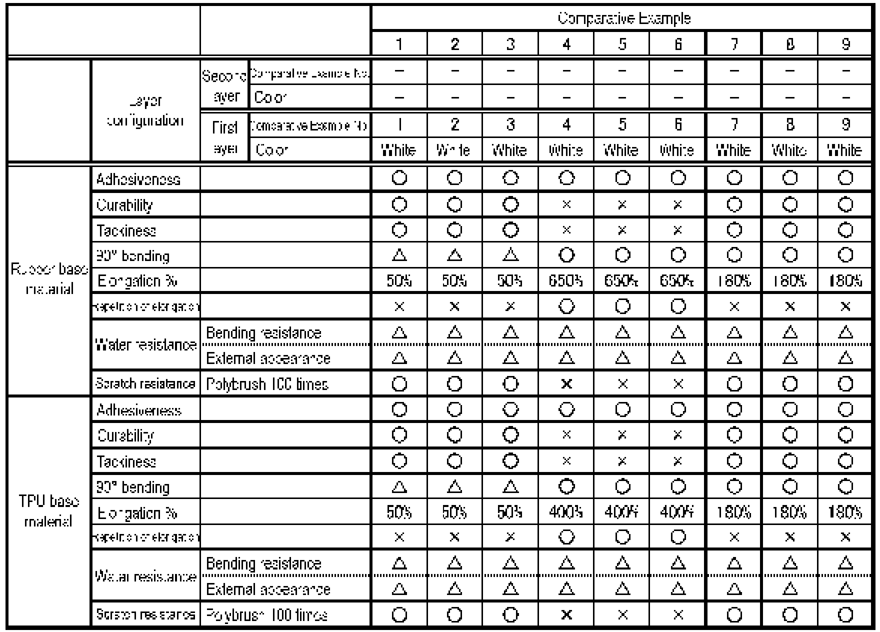

It was confirmed that in a printed object having a decorative print layer formed thereon which is a cured film of an active-energy-ray-curable ink composition containing a monomer A): a monofunctional monomer having a glass transition point of -30°C or lower, and a monomer B): a polyfunctional monomer having a glass transition point of 0°C or lower, even if expansion and contraction is repeated continuously, the occurrence of cracking or peeling in the decoration could be prevented (Examples 1 to 43). Furthermore, since a decoration is printed directly on a flexible base material by an inkjet method, the degree of freedom of decoration of the flexible base material can be increased.

It can be seen from Table 4-1 to Table 4-3 that generally the following tendency is shown. Examples 1 to 6 contain the monomer A) and the monomer B), but do not contain the monomer C). As a result, satisfactory results are obtained, but the Examples have inferior scratch resistance compared with the case of containing the monomer C) in addition to the monomer A) and the monomer B) (Examples 7 to 27). Among others, since Examples 4 to 6 include a monomer B) with high Tg, their cured film fracture point elongations are also inferior compared with other Examples.

Examples 7 to 27 represent cases containing the monomer C) in addition to the monomer A) and the monomer B), and have suitable scratch resistance as compared with the cases containing the monomer A) and the monomer B) only (Examples 1 to 6). Examples 28 to 31 contain the monomer A), monomer B) and monomer C), but since the contents of some of the monomers are close to the upper limit or the lower limit, these Examples are inferior to Examples 7 to 27 in terms of any one of tackiness, scratch resistance, elongation evaluation and curability. Hereinafter, a more detailed explanation will be given.

Regarding curability, it was confirmed that when the amount of the monomer A) is 50% by mass or less relative to the total amount of active-energy-ray-polymerizable monomers (Examples 7 to 27 and the like), excellent curability is obtained as compared with the cases where the amount of the monomer A) is more than 50% by mass relative to the total amount of active-energy-ray-polymerizable monomers (Example 29). Furthermore, it was confirmed that when the amount of the monomer B) is more than 5% by mass relative to the total amount of active-energy-ray-polymerizable monomers (Examples 7 to 27 and the like), excellent curability is obtained as compared with the case when the content of the monomer B) is 5 parts by mass or less (Example 30).

Regarding tackiness, it was confirmed that when the amount of the monomer A) is 50% by mass or less relative to the total amount of active-energy-ray-polymerizable monomers (Examples 7 to 27 and the like), stickiness is lower as compared with the case when the amount of the monomer A) is more than 50% by mass relative to the total amount of active-energy-ray-polymerizable monomers (Example 29). This is speculated to be because when the amount of the monomer A) is more than 50% by mass relative to the total amount of active-energy-ray-polymerizable monomers, the Tg of the ink composition is lowered excessively.

Regarding stretchability, it was confirmed that when the amount of the monomer A) is 5% by mass or more relative to the total amount of active-energy-ray-polymerizable monomers (Examples 7 to 27 and the like), the cured film fracture point elongation and the repeatability of expansion and contraction are excellent as compared with the case when the amount of the monomer A) is less than 5% by mass relative to the total amount of active-energy-ray-polymerizable monomers (Example 28). Furthermore, it was confirmed that when the amount of the monomer B) is 20% by mass or less relative to the total amount of active-energy-ray-polymerizable monomers (Examples 7 to 27 and the like), the cured film fracture point elongation and the repeatability of expansion and contraction are excellent as compared with the case when the amount of the monomer B) is more than 20% by mass relative to the total amount of active-energy-ray-polymerizable monomers (Example 31). Meanwhile, the fracture point elongation of an SBR sheet is 650%, while the fracture point elongation of a TPU sheet is 400%. That is, in regard to the evaluation, a sample having a fracture point elongation of 650% or 400% is due to the fracture of the base material, not the cured film, and therefore, a cured film formed from the ink composition of the present invention has stretchability to the extent that the cured film can be stretched further, even if the base material is fractured.

Regarding scratch resistance, it was confirmed that when the amount of the monomer A) is 50% by mass or less relative to the total amount of active-energy-ray-polymerizable monomers (Examples 7 to 27 and the like), excellent scratch resistance is obtained as compared with the case when the amount of the monomer A) is more than 50% by mass relative to the total amount of active-energy-ray-polymerizable monomers (Example 29). Furthermore, it was confirmed that when the ink composition also contains a monomer C): a monofunctional monomer having an alicyclic structure having a glass transition point of from 0°C to 110°C, in addition to the monomer A) and the monomer B) (Examples 7 to 27 and the like), excellent scratch resistance is obtained as compared with the case when the ink composition does not contain the monomer C) (Examples 1 to 6). From this, it can be said that when the monomer C) is added, the cured film has increased strength.

In Examples 32 to 43, printing is performed by overlapping inks of a plurality colors. When printing is performed by overlapping inks of a plurality of colors, the layer thickness of the decorative print layer becomes thicker compared with the case of performing printing an ink of a single color only once; however, it was confirmed that even in this case, the various properties are not affected. Furthermore, it was confirmed that there is no difference in the various properties even with overlapping colors. When printing is performed by overlapping inks, it is preferable because color developability and designability are enhanced. Particularly, it is preferable if a white ink is used as an ink for initial printing after platemaking, because color developability or designability of the inks printed thereabove is enhanced.

On the other hand, it was confirmed that when the ink composition does not contain the monomer A), the cured film fracture point elongation is markedly deteriorated, and bending resistance as well as the repeatability of expansion and contraction are also deteriorated (Comparative Examples 1 to 3). As a result, when printing is performed on a flexible base material, the cured film cannot conform to the elongation of the flexible base material, and cracking or peeling may occur in the cured product of the ink composition. Furthermore, it was confirmed that when the monomer B) is replaced with a monofunctional monomer, curability is markedly decreased, and along with this, tackiness and scratch resistance are also decreased (Comparative Examples 4 to 6). Furthermore, it was confirmed that when the monomer B) is replaced with a monomer having a high Tg, sufficient cured film fracture point elongation cannot be obtained, and repeatability of expansion and contraction is also deteriorated (Comparative Examples 7 to 9).

### Examples 44 to 61

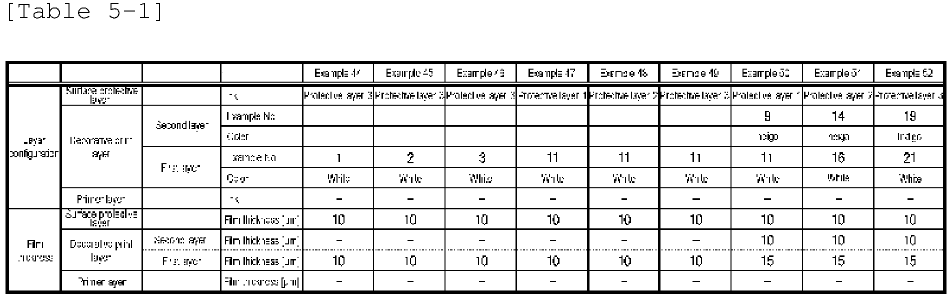

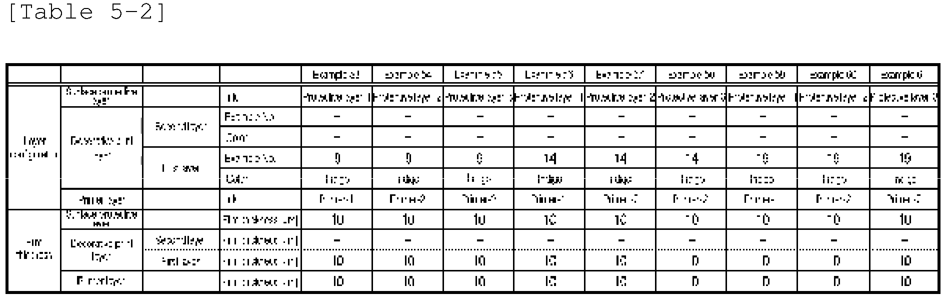

The details of the raw materials are as follows.

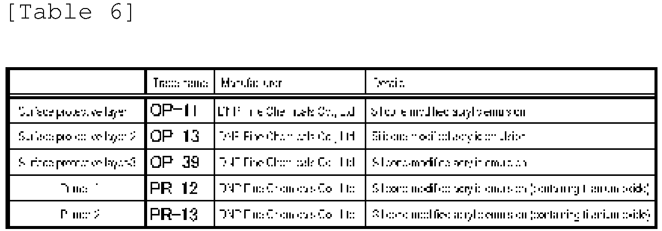

### [Production of printed object]

A printed object was produced using an SBR sheet having a thickness of 1 mm as a base material, in order to submit the printed object to a table evaluation. The composition for constituting a primer layer as indicated in Table 5 was applied on the rubber base material using a bar coater #20 so that the average film thickness after being dried would be 10 µm. Then, the composition was dried for one minute at 120°C. A primer layer was obtained through the above-described process.

Subsequently, the composition for constituting a decorative print layer as indicated in Table 5 was printed by an inkjet method on the surface of the primer layer, so that the average film thickness would be the film thickness indicated in Table 5. Then, the ink composition was cured using a SubZero system (UV lamp system, manufactured by Integration Technology, Ltd., D valve, power output 100 W/cm), under the conditions of a cumulative amount of light of 640 mJ/cm², a peak illuminance of 640 mW/cm², and a rate of conveyance of 18 m/min. The measurement of the cumulative amount of light and the peak illuminance was carried out using an ultraviolet actinometer, UV-351 (manufactured by Orc Manufacturing Co., Ltd.). Thereby, a decorative print layer was produced.

Subsequently, the composition for constituting a surface protective layer as indicated in Table 5 was applied on the surface of the decorative print layer using a bar coater #20, so that the average film thickness after being dried would be 10 µm. Then, the composition was dried for one minute at 120°C. A surface protective layer was obtained through the process described above, and also, printed objects of Examples 44 to 61 were obtained.

### Evaluation

For the printed objects described above, in addition to the items evaluated in Example 1 and the like, regarding scratch resistance, not only the external appearance on the occasion in which the sample was rubbed 100 times in a reciprocating manner with a Polybrush, but also the external appearance on the occasion in which the sample was rubbed 100 times (in a single direction) with a brass brush, and the external appearance on the occasion in which the coating film was scratched with fingernails at room temperature were also evaluated. The results are presented in Table 7. A sample in which no change was observed in the external appearance was rated as "O", a sample in which scratches were observed in the coating film was rated as "Δ", and a sample in which peeling of the coating film was observed was rated as "×".

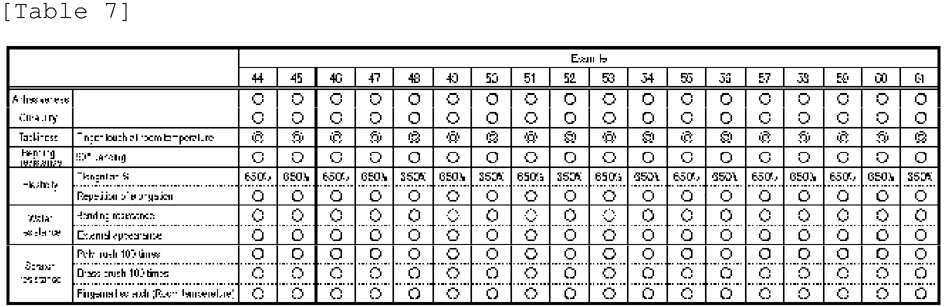

In regard to Examples 44 to 49, it was confirmed that when a surface protective layer was formed on the surface of the decorative print layer, water resistance, scratch resistance and the like were further enhanced as compared with Examples 1 to 3 and 11. Furthermore, in regard to Examples 53 to 61, it was confirmed that even when a primer layer was formed between the surface of the flexible base material and the decorative print layer, the performance was not deteriorated.

In regard to Examples 50 to 52, it was confirmed that even when the kinds of the monomers included in the ink composition that constituted the decorative print layer were different, the performance was not deteriorated as compared with Examples 44 to 49. Furthermore, it was confirmed that when a surface protective layer was formed, the effect was effective not only for an enhancement of water resistance and scratch resistance (Polybrush), but also for an enhancement of other resistance properties such as detergent resistance and chemical resistance.

## Claims

1. An active-energy-ray-curable ink composition comprising active-energy-ray-polymerizable monomers and an active-energy-ray-polymerization initiator,
the active-energy-ray-polymerizable monomers including:
monomer A): a monofunctional monomer having a glass transition point of -30°C or lower; and
monomer B): a polyfunctional monomer having a glass transition point of 0°C or lower.

2. The active-energy-ray-curable ink composition according to claim 1, wherein the monomer B) is a bifunctional monomer having a glass transition point of -30°C or lower.

3. The active-energy-ray-curable ink composition according to claim 1 or 2, comprising:
2% to 65% by mass of the monomer A); and
2% to 30% by mass of the monomer B)
among the active-energy-ray-polymerizable monomers.

4. The active-energy-ray-curable ink composition according to any one of claims 1 to 3, further comprising, as the active energy-ray-polymerizable monomer,
monomer C): a monofunctional monomer having an alicyclic structure having a glass transition point of from 0°C to 110°C.

5. The active-energy-ray-curable ink composition according to claim 4, comprising, among the active-energy-ray-polymerizable monomers, 20% to 65% by mass of the monomer C).

6. The active-energy-ray-curable ink composition according to claim 4 or 5, wherein the monomer A) is any one or more monomers selected from isooctyl acrylate, tridecyl acrylate and ethoxydiethylene glycol acrylate,
the monomer B) is any one or more monomers selected from polypropylene glycol diacrylate, polyethylene glycol diacrylate and EO-modified bisphenol A diacrylate, and
the monomer C) is any one or more monomers selected from isobornyl acrylate, 4-t-butylcyclohexyl acrylate, cyclohexyl acrylate and dicyclopentenyloxyethyl acrylate.

7. The active-energy-ray-curable ink composition according to any one of claims 1 to 6, further comprising a coloring material.

8. The active-energy-ray-curable ink composition according to any one of claims 1 to 7, wherein when the active-energy-ray-curable ink composition according to any one of claims 1 to 7 is formed as a cured film having a thickness of 10 µm on a styrene-butadiene rubber (hereinafter, referred to as "SBR") sheet having a thickness of 1 mm, and the cured film-formed base material having this cured film formed thereon is used as a specimen of dumbbell-shaped No. 6 (JIS K6251-5) to perform a tensile test according to the method of JIS K7161 at 25°C and a tensile rate of 100 mm/min, the cured film fracture point elongation at which cracking occurs in the cured film is 200% or more.

9. The active-energy-ray-curable ink composition according to any one of claims 1 to 8, wherein when the active-energy-ray-curable ink composition is formed as a cured film having a thickness of 10 µm on an SBR sheet having a thickness of 1 mm, and expansion and contraction of the cured film-formed base material having this cured film formed thereon is repeated 50 times at a strain rate of 100 mm/min so that the elongation ratio of the cured film-formed base material oscillates in the range of from 100% to 200%, cracking does not occur in the cured film.

10. The active-energy-ray-curable ink composition according to any one of claims 1 to 9, which is used as an inkjet ink for an elastomer base material or a base material to be printed having a Young's modulus of from 0.001 MPa to 30 MPa.

11. A printed object comprising an ink cured film layer which is a cured film of the active-energy-ray-curable ink composition according to any one of claims 1 to 10, formed on an elastomer base material or a base material to be printed having a Young's modulus of from 0.001 MPa to 30 MPa.

12. The printed object according to claim 11, wherein a surface protective layer that protects the surface of the ink cured film layer is formed on the surface of the ink cured film layer.

13. The printed object according to claim 11 or 12, wherein a primer layer is formed between the surface of the elastomer base material or the base material to be printed and the ink cured film layer.

14. A method for producing a printed object, the method comprising printing the active-energy-ray-curable ink composition according to any one of claims 1 to 9 on an elastomer base material or a base material to be printed having a Young's modulus of from 0.001 MPa to 30 MPa by an inkjet method, and then curing the ink composition with ultraviolet radiation.
